Europäisches Patentamt

(19) European Patent Office

Office européen des brevets

(11) Publication number: **0 077 685**
**A2**

(12) # EUROPEAN PATENT APPLICATION

(21) Application number: **82305552.0**

(22) Date of filing: **19.10.82**

(51) Int. Cl.³: **G 06 F 15/46**

(30) Priority: **21.10.81 US 313429**

(43) Date of publication of application:
**27.04.83 Bulletin 83/17**

(84) Designated Contracting States:
**DE FR GB SE**

(71) Applicant: **HONEYWELL INC.**
**Honeywell Plaza**
**Minneapolis Minnesota 55408(US)**

(72) Inventor: **Horn, Brian C.**
**2429 East Cholla Street**
**Phoenix Arizona 85028(US)**

(74) Representative: **Harman, Michael Godfrey et al,**
**Honeywell Control Systems Ltd. Patent Department**
**Charles Square**
**Bracknell Berks RG12 1EB(GB)**

(54) Industrial process control system.

(57) An industrial process plant has data concerning its inputs and outputs fed to a control apparatus which optimizes operation by an optimization procedure using linear programming. The plant includes components which can be switched between idle and run states. A process model representing the plant includes a plurality of constraint functions and an objective function which is to be minimized or maximized, the latter function including terms for each idle/run component representing a change in its status. A model updating procedure updates the parameters of the process model in accordance with the current process state, including setting the signs of the coefficients of the idle/run component terms in dependence on the current statuses of those components so that each such term makes a positive cost contribution to the objective function in the event of a change of status. A scheduling procedure operates the optimization procedure at fixed intervals and/or whenever the current state differs sufficiently from the most recent state set by the optimization procedure, or under operator control.

FIG. 2

EP 0 077 685 A2

## INDUSTRIAL PROCESS CONTROL SYSTEM

This invention is in the field of methods of controlling processes to produce desired products at desired rates and at minimum cost.

The use of a digital computer to control complex processes of a process plant or of a portion of such a plant is well known in the process control art, including the use of computers in optimizing process operations. This, in practice, requires the computer to calculate the best set points, desired values for process variables, at which to run the process and/or the components of the process. In practice, the computer calculates the set points for the components of a process and/or the components thereof and then applies the set points to control loops, which can exist either in the computer or externally of the computer in individual controllers.

Processes in industrial plants are subject to disturbances which require compensating action in the form of adjustments to the operating variables, including the starting up of idle equipment or the shutting down of running equipment if the disturbance is large enough. Such disturbances can be the result of the accumulation of gradual changes over a substantial period of time. Examples of such disturbances include changes in feedstock availability or cost; fuel, steam, electrical power or other energy source availability or cost; demand or prices of products of the process; condition of processing equipment and machinery; ambient conditions; and others. Compensating operational actions include adjustments to equipment output rates; energy sources and rates; operating pressure, temperature and other process variables; feedstock types and rates; catalyst additional and removal rates; residence times; idle or running status of equipment or process units; and others. For many industrial processes, a number of different operational adjustments can be made. The effect of a given adjustment is not confined to one well-defined result, but rather produces a range of results, some larger and some smaller, throughout the process, due to the interactions of many parts of the process with each other. These can be caused by the sharing of feedstock and energy streams and product output capabilities. Other causes are the fact that the output of one part of the process is the input to another. For a large class of industrial processes, there are numerous products, each with a different value, and possibly, with a specified minimum or a maximum rate of production. There are often numerous feedstocks and energy sources, each with a different cost and possibly with a specified maximum or minimum availability. Often there are numerous alternative pieces of equipment, process components and processing steps which may be selected, each with different operating characteristics and availability. These process characteristics make it difficult to manually keep the operating variables adjusted to maximize profit or minimize cost of operations.

On-line, closed-loop optimization of continuous operating variables has been accomplished in the past. The usual mathematical technique for doing this is known as linear programming (LP); in this technique, all functions are linear, and this makes the technique reasonably simple, compared to the great complications which can arise if non-linear functions are involved. If a function is in fact markedly non-linear, then it can be approximated by means of 2 or more linear functions over different ranges, and the LP technique can easily be extended to switch between the different linear functions as the relevant variable changes.

Such on-line, closed-loop control has however not involved the simultaneous real-time adjustment of idle and run statuses. On-line real-time optimization techniques have been limited to continuous operating variables. In types of process with a number of process units or components, only some of which need to be running under circumstances which prevail at least part of the time, prior art on-line, real-time techniques could not determine the optimal choice of which process component or unit should be put in a run status and which in an idle status at any particular point in time. This limitation is the result of the discontinuous nature of the transition idle to run status or vice-versa which is characteristic of most process components.

In complex industrail processes, such as that of an industrial power plant for a petro-chemical plant, for example, the plant will typically have several steam boilers for producing steam, turbines for driving electric generators to produce electrical power, feedwater pumps for the boilers, etc. The inputs to the plant will typically be several different types of fuel and electrical energy purchased from an electric utility. The output of the process to users could be steam at various pressures, electricity, compressed air, chilled water, etc. The plant produces or acquires products, utilities, for example, at rates the user of the output of the plant require.

Optimizing on a real-time basis the process of supplying the desired products, utilities in the example, to meet demands at minimum cost, particularly deciding when to change the status of process components from run to idle, or vice versa, is a function that heretofore process control computers have not been able to perform on a real-time basis.

Accordingly the present invention provides a process plant, control apparatus which is fed with data concerning the inputs and outputs of the process and optimizes the operation of the plant, comprising:
a process model which represents the process by means of an objective function and a plurality of constraint functions;
an optimization procedure which determines, from the process model and the current state of the process, the optimum state of the process;
a model updating procedure which updates the parameters of the process    model in accordance with the current state of the process; and

a scheduling procedure which determines when the optimization procedure and model updating procedure shall be performed,

<u>characterized in that</u> the plant includes a plurality of discontinuously operable process components each of which can have an idle or a run status;

the process model includes, in its objective function, a term for each idle/run component representing a change in its status; and

the model updating procedure sets the sign of the coefficient of each such term in dependence on the current status of the associated component so that the term makes a positive cost contribution to the objective function in the event of a change of status of the component.

In the present invention, the technique which is preferably used is that known as mixed integer programming, MIP. This technique is a development of LP which permits the incorporation of discontinuous variables, such as integer variables (which can take only integer values) or logical variables (which can take only the values 0 and 1).

It is not possible to apply MIP directly to on-line control, because in its standard form it will recommend, at each instant at which optimization occurs, any combinations of start-ups and shut-downs which will improve the value of the objective function, i.e. will increase the instantaneous efficiency of the system, no matter how slightly. In off-line uses, this is satisfactory, because start-up and shut-down costs are generally negligible compared to running costs. In an on-line context, however, this is not satisfactory, because the objective function does not take into account the start-up and shut-down costs, and these may far outweigh small savings in running costs over typical optimization periods of 2 to 4 hours.

In the present invention, potential MIP start-up and shut-down recommendations which would frequently change the status of a plant unit back and forth to achieve only small savings of running cost are screened out. This is achieved by including, in the objective function, a cost coefficient which is multiplied by the logic variable for that unit and which has its sign set, prior to solving the optimization, so that a change in status will result in a positive cost. Thus any change of status, whether by start-up or by shut-down, is represented in the objective function as a positive cost, and this must be counterbalanced by a greater saving in running costs before the change can be made.

To make the idle/run transition costs compatible with the rest of the objective function, the cost of making the transition is estimated (two different values for start-up and shut-down can be used). The length of time the equipment is likely to remain in its new status is estimated; this could be seasonal, monthly, or daily. The ratio of the cost to the estimated time is then determined, as a cost rate which is compatible with the rest of the objective function.

We have found, both from actual control of an on-line system and from simulation studies, that control of idlerun decisions by the present system account for about 50% of the total savings resulting from applying the full optimization procedure. This is a surprisingly high proportion.

An industrial plant and process embodying the present invention will now be described in detail, by way of example, with reference to the drawings, in which:

Figure 1 is a schematic diagram of the components of a process of an industrial plant;

Figure 2 is a schematic view of the computing procedure of the present system and how it inter-relates with a plant process;

Figure 3 is a graph of a boiler model; and

Figure 4 is a flow chart of the discontinuous optimization procedure.

INTRODUCTORY SUMMARY

The present system provides a real-time method which minimizes the cost, or maximizes the profit, of operating a process plant, or portion of the plant, by the optimal adjustment of the running versus idle status of the process components, or units, of the process. A digital computer is used in controlling the process and in determining which of the process components of the process will be placed in run or idle status. The process has a plurality of inputs and it is capable of producing a plurality of products or outputs. Necessary data such as the variables and parameters of the process are provided to the computer on a continuing basis. The computer is also provided with a mathematical description, or model, of the process, which is used in calculating the optimum values of the continuous variables and discontinuous or logic variables of the process. The computer is provided with an optimization procedure which determines the optimum state of operation of the process by calculating the value of the logic variables associated with each component which determines their status, run or idle, for the optimum state of the process. In addition, this program uses data supplied to the computer on a continuous basis to determine the desired values for the continuous variables. Periodically, as a result of comparing the current state of operation of the process with the most recently calculated or determined optimum state produced by the optimization procedure, or after a predetermined period of time has elapsed since the previous optimum state was determined, the computer initiates the operation of the optimization procedure to produce an updated optimum state of the process which determines if any of the logic variables associated with each of the components of the process should be changed to satisfy the new or updated objective function which is descriptive of the optimum state for the process at that time. The computer then causes the statuses of the process components, run or idle, to be in accord with the latest optimum state, which includes changing the status of the process components from run to idle or idle to run as required.

DETAILED DESCRIPTION

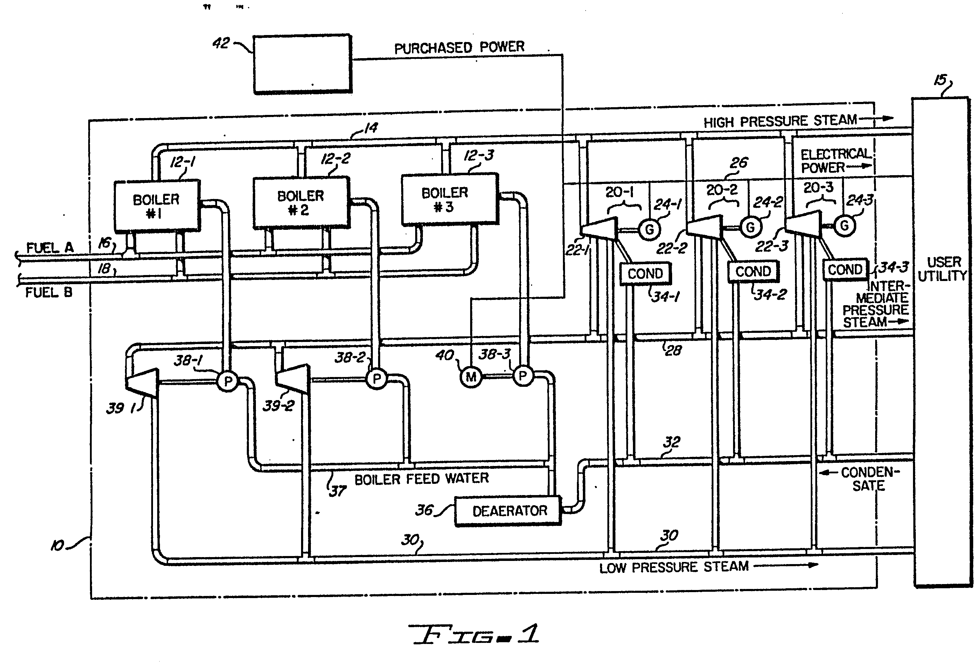

Figure 1 shows the process units or components of a conventional industrial power plant, or power house, 10; the present system optimizes the operation of this plant. The power plant 10 has three conventional boilers 12-1, 12-2 and 12-3, each of which is capable of producing high-pressure steam. The steam produced by boilers 12-1, 12-2, 12-3, is supplied to high-pressure steam supply line, or header, 14, and through header 14 to utility users 15 of high-pressure steam in various processes. Each of the boilers 12-1, 12-2, 12-3, is capable of burning two different types of fuel; fuel A, coal, and fuel B, fuel oil. Fuel A is supplied through conduit 16 and fuel B is supplied through conduit 18 to the boilers 12-1, 12-2, 12-3. Fuel A is always supplied to a boiler, and fuel B is added under certain circumstances.

Power plant 10 has several turbogenerator sets 20-1, 20-2, and 20-3, which includes extraction turbines 22-1, 22-2 and 22-3 driving electrical generators 24-1, 24-2 and 24-3 to produce electrical power. The electrical power is fed to an electrical bus or power line 26 which conveys the electric power to users 15. Each of the turbines 22-1, 22-2, 22-3 has a conventional high-pressure section, intermediate section and low-pressure section. High-pressure header 14 also supplies high-pressure steam to the high-pressure section of each turbine 22-1, 22-2, 22-3 through a conventional throttle valve (not shown). The high-pressure section of each turbine supplies extraction steam to the intermediate steam pressure header, or line 28. Extraction steam flowing from the intermediate pressure section of each of the turbines 22-1, 22-2, 23-2 is supplied to low- steam pressure header 30. Exhaust steam from the lower pressure sections of each turbine 22-1, 22-2, 22-3 is connected to a condenser 34-1, 34-2, 34-3 and condensate from the condensers flows into condensate line 32. High, low, and intermediate headers 14, 28 and 30 supply steam to processes of utility user 15 that require substantial quantities of steam such as are frequently found is chemical plants, for example. Condensate from steam supplied to processes of users 15 flows back to plant 10 through condensate line 32. Line 32 is provided with a deaerator 36. Condensate after being deaerated by deaerator 36 is deemed to be boiler feedwater in feedwater line 37. Feedwater for boilers 12-1, 12-2, 12-3 can be supplied by any one of the feedwater pumps 38-1, 38-2, 38-3. Pumps 38-1 and 38-2 are powered by turbines 39-1 and 39-2. Turbines 39-1 and 39-2 are fed with intermediate pressure steam from intermediate pressure steam header 28, and steam extracted from turbines 40-1, 40-2, flows into low-pressure steam header 30.

Feedwater pump 38-3 is powered by an electric motor 40 which is supplied with electric power from distribution bus, or line 26. Electric power from a source external to plant 10 such as an electric utility power plant 42 can be connected to bus 26 to supplement the electric power produced by turbogenerator sets 20-1, 20-2, 20-3, or to supply all the needs for electrical power if that is the optimum way to provide electrical energy to user 15. That portion of process 10 which determines the amount of electric power purchased from plant 42 is a process component of process 10.

There are conventional and well known sensors for measuring temperature, pressure, flow rate, power produced, power purchased, fuels consumed, etc., of the process components, as well as means for controlling process 10, not shown.

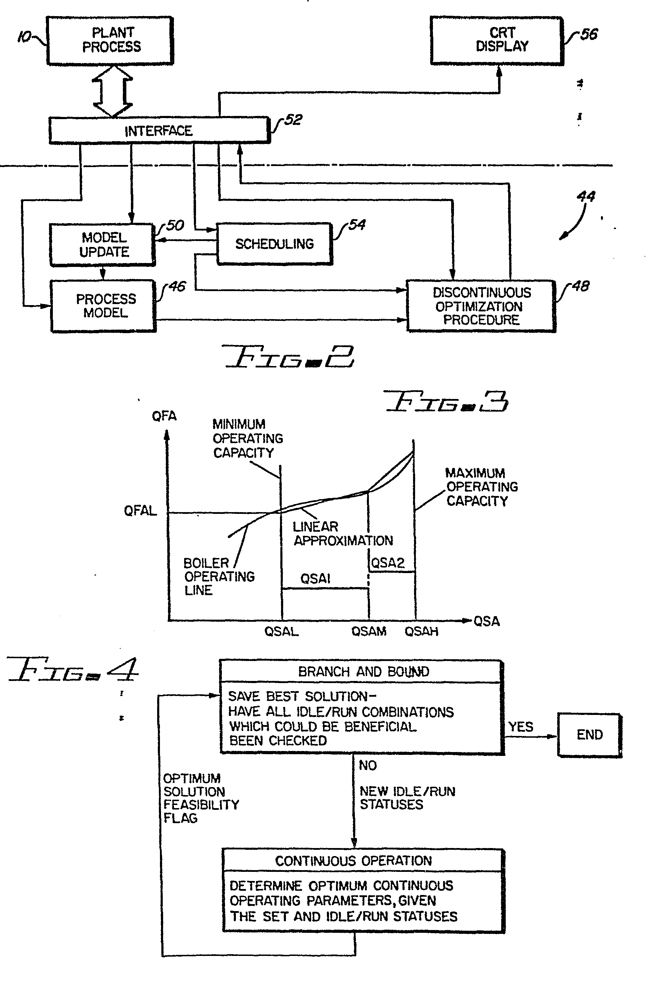

To minimize the cost of operation of the plant 10, which may be termed process 10, requires the use of process control apparatus 44 such as a programmable digital data processing system; the major functions, or procedures, which reside in and are executed by computer 44 and their relationship to process 10 are illustrated in Figure 2. Process model 46 is a mathematical description of the operation of process 10 which is to be optimized and includes the effects of idling or running the various process units or equipment items of process 10 by use of discontinuous logic variables. Optimization procedure 48, which may be termed a discontinuous optimization procedure since it can determine the values of the logic variables and continuous variables of the optimum state of process 10 at any given time, uses the process model in determining the optimum values of the set of logic and independent variables for each process unit of process 10. Process model 46 contains parameters which are assumed to be constant during a given calculation of the optimum state of the process, but which are actually slowly changing in value as a result of changes in equipment characteristics over a period of time. To compensate for such changes, model update procedure 50 updates the parameters of process model 46 before optimization procedure 48 is executed so that model 46 of process 10 is an accurate representation of the actual process. Data required during the execution of various procedures are obtained from sensors on, or related to, the operation of the various process components. The signals or data from these sensors are transferred through interface 52 to computer 44. Scheduling procedure 54 causes computer 44 to monitor the state of process 10 on a continuing basis and to compare the actual state of process 10 with the optimum process state when last determined by optimization procedure 48. If there is a significant difference between the actual process state at a given time and the optimum state as last determined by optimization procedure 48, scheduling procedure 54 causes optimization procedure 48 to recalculate an optimum state of process 10 based on the most recently available data.

Such a recalculation of the optimum state will also occur after a predetermined period of time has elapsed since the last calculation, or upon the demand of the operator of plant 10.

The process model can be described mathematically as follows. There is a set p of continuous independent variables $X_i$, which are related to (or are) the continuous operating adjustments of the process, and a set q of discontinuous or integer independent variables, $I_j$, which represent the idle or running statuses of the process units or equipment items. These are combined in an objective function Z, which represents the cost or profit of operating the process, and is to be minimized or maximized as the case may be. Thus

$$Z = F(X_1, X_2, \ldots X_p, I_1, I_2, \ldots I_q).$$

In addition to this primary objective function, there is a set of r dependent variables $Y_k$, which represent quantities which are subject to constraints. Each $Y_k$ is a respective function of the continuous and integer independent variables $X_i$ and $I_j$, like the objective function Z. Finally, there are limits on the integer and dependent variables $I_j$ and $Y_k$; each of these has upper and lower bounds, $I_{jU}$ and $I_{jL}$ for $I_j$ and $Y_{kU}$ and $Y_{kL}$ for $Y_k$. (A limit on a continuous independent variable $X_i$ can be represented by defining a dependent variable as being simply equal to the independent variable to be limited.)

The above equations generically represent a process model and in the preferred embodiment are linear equations so that the model is a linear model of process 10. A linear model is one in which no independent variable occurs in the model which is multiplied by another independent variable or itself. A linear model is used since it normally can be solved by a linear model program in a shorter period of time than a non-linear model; however, non-linear models can be used equally well if the time for calculating a solution is not a problem.

- 11 -

The integer independent or discontinuous variables, also termed integer variables and logic variables, are treated specially by the discontinuous optimization procedure 48 so that each logic variable may have only the values 0 or 1 in a solution. Since each process component of process 10 by definition has a run status and an idle status, each process component has an associated logic variable, with the value 0 representing its idle status and the value 1 representing its running status. The equations for each of the process components are formulated so that the no-load input value and the minimum output value, if other than zero, multiply the logic variable. A special constraint is introduced to force the output value, and therefore the input value, to 0 when the logic variable is 0.

For process 10, the method determines which of the boilers, turbines and feedwater pumps should be idle and which should be running, the steam production rate for each running boiler, the relative rates at which the two fuels are to be supplied to each boiler, the power generated on each running turbogenerator, each turbogenerator extraction steam flow rate, the amount of purchased power, and the feedwater flow rate of each running pump whether powered by steam or electricity, so that the present demands by utility user 15 for electric power and steam are met, for example, while the total cost of the purchased power and fuels is minimized.

Figure 3 is a graph of linear equations which describe the operation of one of the boilers 12-1, 2, 3, etc., using fuel A. A graph of the linear equations describing the operation with fuel B is not illustrated because it is assumed that the boiler is always fired with fuel A, and fuel B is an incremental fuel whose fuel versus steam curve passes through the origin. The model for one of the boilers using fuel A as the base fuel and fuel B as the incremental fuel B is as follows (where an asterisk indicates multiplication):

QFA = QFAL*I + AA1*QSA1 + AA2*QSA2

QFB = AB*QSB

QS = QSAL*I + QSA1 + QSA2 + QSB

QSRM = QSAH*I - QS

0 ≤QSA1 ≤QSAM - QSAL

0 ≤QSA2 ≤QSAH - QSAM

0 ≤QSB

0 ≤QSRM

0 ≤QFA ≤QFAH

0 ≤QFB ≤QFBH

Nomenclature

| | | |
|---|---|---|
| QS | Total rate of heat pickup by steam and blow-down. | |
| QSA,SQB | Independent variables. Rates of heat pickup from fuels A and B. | |
| QSAL, QSAH | QSA at minimum and maximum firing rates of fuel A. | |
| QSAM | QSA at breakpoint of two line segments which approximate curve of QFA versus QSA. | |
| QSA1, QSA2 | Independent variables. QSA on first and second line segments (QSA above QSAL, QSAM respectively). | |
| QFA,QFB | Rates of heat release from fuels A and B. | |
| QFAL, QFAH | QFA at minimum and maximum firing rates of fuel A. | |
| QFBH | QFB at maximum firing rate of fuel B. | |
| I | Integer independent variable representing idle or running state of the boiler. | |
| AA1,AA2 | Slopes of fuel A versus steam from fuel A on first and second line segments. | |
| AB | Slope of fuel B versus steam from fuel B. | |

The boiler used in this example is supplied with two types of fuel, fuel A and fuel B. Fuel A is always being supplied or fired; it is the base fuel. Fuel B may be optionally fired. It is assumed that fuel A alone can produce steam at the maximum rate for each of the boilers; thus, QSAH is a maximum total steam as well as the maximum steam from fuel A. Because fuel A is always fired, it is considered to provide the constant boiler heat losses. Fuel B is therefore represented as an incremental fuel whose fuel-versus-steam curve passes through the origin. Other formulations are possible for different types of fuel firing schedules. Similar models can be developed for each of the operating components, as is well known in the process control art using well-known linear programming techniques.

Optimization procedure 48 takes into account in determining the optimum state for process 10 the cost of starting up or shutting down a process unit. This is accomplished by including each logic variable in the objective function, with each logic variable being multiplied by an idle/run cost coefficient for the process component associated with that logic variable. Prior to beginning the execution of the optimization procedure 48, the sign of the idle/run cost coefficient is set by the model update function so that a cost is incurred if the idle/run status is changed from its presently existing status. Thus, the objective function is expressed in terms of cost to be minimized. The absolute value of the coefficient is given a + sign for an idle present status and a - sign for a running presetn status.

This has the effect of always increasing cost from the present cost if the status of any logic variable changes from 0 to 1 on start-up or from 1 to 0 on shut-down. Cost is increased by the amount of the coefficient. Large coefficients therefore prevent the optimization from changing the statuses of process components unless savings greater than costs associated with changing the status can be realized by doing so.

The system utilizes an augmented simplex procedure to determine the optimum of the continuous process model; i.e. with some combination of idle and run choices being made for each integer variable. A branch-and-bound technique is used to choose the different combinations of idle and run choices, each of which is solved by the simplex method. The flow chart of Figure 4 is illustrative of this procedure, which is more thoroughly described in an article entitled "How to Use Mixed-Integer Programming" by Derek H. Allan in Chemical Engineering, March 29, 1976, pages 114-120.

Values of the logic variables, independent variables, parameters, etc., of the most recently updated optimum state for process 10 as a result of the execution of optimization procedure 48 are used to control process 10 and its process components by control signals transmitted from process control computer 44 through interface 52 to adjust the set points of the controls of process 10 to correspond to the optimum state. Any signals representing useful information concerning process 10 can also be displayed on CRT console 56. Such displays permit an operator to monitor the process and to be aware of the idle/run status of each of the process components as determined by the process control computer in placing the process in its optimum state.

CLAIMS

1. In a process plant, control apparatus which is fed with data concerning the inputs and outputs of the process and optimizes the operation of the plant, comprising:

a process model which represents the process by means of an objective function and a plurality of constraint functions;

an optimization procedure which determines, from the process model and the current state of the process, the optimum state of the process;

a model updating procedure which updates the parameters of the process model in accordance with the current state of the process; and

a scheduling procedure which determines when the optimization procedure and model updating procedure shall be performed,

<u>characterized in that</u> the plant includes a plurality of discontinuously operable process components each of which can have an idle or a run status;

the process model includes, in its objective function, a term for each idle/run component representing a change in its status; and

the model updating procedure sets the sign of the coefficient of each such term in dependence on the current status of the associated component so that the term makes a positive cost contribution to the objective function in the event of a change of status of the component.

2. Control apparatus according to Claim 1, characterized in that the scheduling procedure operates at predetermined intervals.

3. Control apparatus according to either previous claim, characterized in that the scheduling procedure is operable in response to an operator input.

4. Control apparatus according to any previous claim, characterized in that the scheduling procedure compares the current process state with the most recent process state determined by the optimization process and operates when the two differ by a predetermined amount.

5. Control apparatus according to any previous claim, characterized in that the optimization procedure solves a mixed integer linear program with a logic variable for each run/idle process component.

FIG-1

FIG-2

FIG-3

FIG-4